(19) Europäisches Patentamt
European Patent Office
Office européen des brevets

(11) EP 4 027 475 A1

(12) EUROPEAN PATENT APPLICATION

(43) Date of publication:
13.07.2022 Bulletin 2022/28

(51) International Patent Classification (IPC):
H02J 3/01 (2006.01)   H02M 1/12 (2006.01)

(21) Application number: 22150451.7

(52) Cooperative Patent Classification (CPC):
H02J 3/01

(22) Date of filing: 06.01.2022

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 06.01.2021 US 202117143006

(71) Applicant: Hamilton Sundstrand Corporation
Charlotte, NC 28217-4578 (US)

(72) Inventor: MISKOVIC, Vlatko
Loves Park, 61111 (US)

(74) Representative: Dehns
St. Bride's House
10 Salisbury Square
London EC4Y 8JD (GB)

(54) **HARMONIC REGULATORS WITH PHASE COMPENSATION**

(57) A harmonic regulator (101) for an AC power system can include a regulator module (103) configured to filter or cancel one or more harmonic frequencies of a fundamental frequency. The regulator module can be configured to inflect phase angle output about the one or more harmonic frequencies. The regulator module can be configured to shift phase at or near one or more harmonic frequencies by a shift angle ($\theta$) to prevent primary regulator instability.

Fig. 1

**Description**

<u>FIELD</u>

This disclosure relates to harmonic regulators (e.g., for AC electrical systems such as generators).

<u>BACKGROUND</u>

Harmonic regulators are narrow frequency band regulator, designed to regulate specific frequencies. Typical models of a control system have a Primary Regulator regulating fundamental (main) frequency component (e.g., 400Hz for aerospace applications), Harmonic Regulators (e.g., for regulating unwanted harmonics, typically to zero value, to eliminate them), a Plant (e.g., load combined with output filter), and Disturbances (e.g., harmonics due to nonlinear loads). Traditional control systems can become unstable around a harmonic frequency due to a drastic shift in phase.

Such conventional methods and systems have generally been considered satisfactory for their intended purpose. However, there is still a need in the art for improved harmonic regulators. The present disclosure provides a solution for this need.

<u>SUMMARY</u>

A harmonic regulator for an AC power system can include a regulator module configured to filter or cancel one or more harmonic frequencies of a fundamental frequency. The regulator module can be configured to inflect phase angle output about the one or more harmonic frequencies. The regulator module can be configured to shift phase at or near one or more harmonic frequencies by a shift angle to prevent the system instability.

In certain embodiments, the shift angle can be 45 degrees. For example, the shift angle can be positive 45 degrees. In certain embodiments, the shift angle is negative 45 degrees. In certain embodiments, the shift angle can be selected from a positive or negative shift angle based on the conditions needed to ensure stability. Any suitable shift angle and/or combinations thereof to prevent control instability is contemplated herein, and one having ordinary skill in the art in view of this disclosure can determine any other suitable angle without undue experimentation.

In certain embodiments, an output of the harmonic module can be ideal. For example, the output of the harmonic module can be defined by Laplace domain equation (3), disclosed below. In certain embodiments, K=10, $\omega$=2$\pi$·2000 (e.g., the 5th harmonic of 400Hz), $\theta$=$\pm$ $\pi$/4 ($\pm$45 degrees). Any other suitable values are contemplated herein.

In certain embodiments, an output of the harmonic module can be non-ideal. For example, in certain embodiments, the output of the harmonic module is defined by Laplace domain equation (4), disclosed below. In certain embodiments, K=10, $\omega$=2$\pi$·2000, $\zeta$=0.01, $\theta$=$\pm$ $\pi$/4. Any other suitable values are contemplated herein.

A power control system for an AC system, can include a primary regulator configured to regulate a fundamental frequency, and a harmonic regulator configured to prevent control system instability. The harmonic regulator can be any suitable embodiment of a harmonic regulator disclosed herein, e.g., as described above.

The system can include a primary sum block configured to sum a harmonic regulator output with the primary regulator output. The system can include a harmonic regulator sum block connected to an output of a plant and an input of the harmonic regulator and configured to subtract an output from a reference value. In certain embodiments, the reference value can be zero, for example. Any other suitable components and/or sum blocks (e.g., a disturbances sum block between a the primary sum block and a plant) is contemplated herein.

In accordance with at least one aspect of this disclosure, a method can include preventing control instability in a power system by modifying phase of a harmonic regulator output at or near one or more harmonic frequencies. In certain embodiments, modifying phase can include adding phase angle to the harmonic regulator output. Modifying phase can include subtracting phase angle from the harmonic regulator output.

These and other features of the embodiments of the subject disclosure will become more readily apparent to those skilled in the art from the following detailed description taken in conjunction with the drawings.

**BRIEF DESCRIPTION OF THE DRAWINGS**

So that those skilled in the art to which the subject disclosure appertains will readily understand how to make and use the devices and methods of the subject disclosure without undue experimentation, embodiments thereof will be described in detail herein below with reference to certain figures, wherein:

Fig. 1 is a schematic diagram of an embodiment of a control system having a harmonic regulator in accordance with this disclosure;

Fig. 2 shows a bode plot of an ideal harmonic regulator output, without phase compensation, wherein K=10 and

$\omega=2\pi\cdot2000$;

Fig, 3 shows a bode plot of a non-ideal harmonic regulator output, without phase compensation, where K=10, $\omega=2\pi\cdot2000$, and $\zeta=0.01$;

Fig. 4 shows a bode plot of an ideal harmonic regulator with phase compensation where phase around resonant frequency is shifted $\pm \pi/4$, where K=10, $\omega=2\pi\cdot2000$, $\theta=\pm \pi/4$;

Fig. 5 shows a bode plot of a non-ideal harmonic regulator with phase compensation where phase around resonant frequency is shifted $\pm \pi/4$, where K=10, $\omega=2\pi\cdot2000$, $\zeta=0.01$, $\theta=\pm \pi/4$;

Fig. 6 shows a Bode plot of non-ideal harmonic regulator in accordance with this disclosure;

Fig. 7 is a simplified block diagram of a feedback-controlled dynamic system, depicting the system loop gain L(s), wherein C(s) is the compensator transfer function and G(s) is the transfer function of the plant being controlled;

Fig. 8 depicts a phase margin of the system shown in Fig. 7, wherein C(s) is the transfer function depicted in the Fig. 6 bode plot, and G(s) is unity;

Fig. 9 depicts the gain and phase margin of the system shown in Fig. 7, wherein C(s) is the transfer function depicted in the Fig. 6 bode plot, and G(s) is a 150 $\mu$s delay;

Fig. 10 depicts the bode plot of non-ideal harmonic regulator with delay compensation, between 1900 Hz and 2100 Hz, with phase margin shown, when $\theta$ = (phase delay at 2000 Hz) . $(2\pi\cdot2000)$ = 150 $\mu$s $\cdot2\pi\cdot2000$ rad/s = $3\pi/5$ rad;

Fig. 11 depicts a bode plot of non-ideal harmonic regulator with delay compensation, between 1900 Hz and 2100 Hz, with phase margin shown, when $\theta=\pi/4$ rad;

Fig. 12 depicts a bode blot of ideal harmonic regulator;

Fig. 13 depicts a phase margin of the system shown in Fig. 7, wherein C(s) is the transfer function depicted in the Fig. 12 bode plot, and G(s) is unity;

Fig. 14 depicts the gain and phase margin of the system shown in Fig. 7, wherein C(s) is the transfer function depicted in the Fig. 12 bode plot, and G(s) is a 150 $\mu$s delay;

Fig. 15 depicts the bode plot of ideal harmonic regulator with delay compensation, between 1900 Hz and 2100 Hz, with phase margin shown, when $\theta$ = (phase delay at 2000 Hz) . $(2\pi\cdot2000)$ = 150 $\mu$s $\cdot2\pi\cdot2000$ rad/s = $3\pi/5$ rad; and

Fig. 16 depicts the bode plot of an ideal harmonic regulator in accordance with this disclosure.

## DETAILED DESCRIPTION

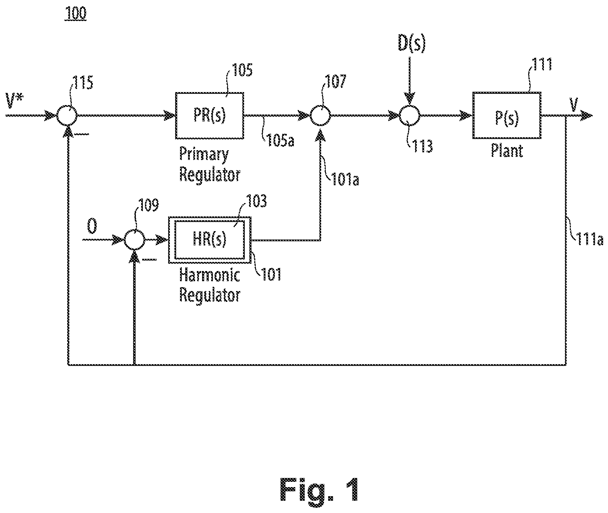

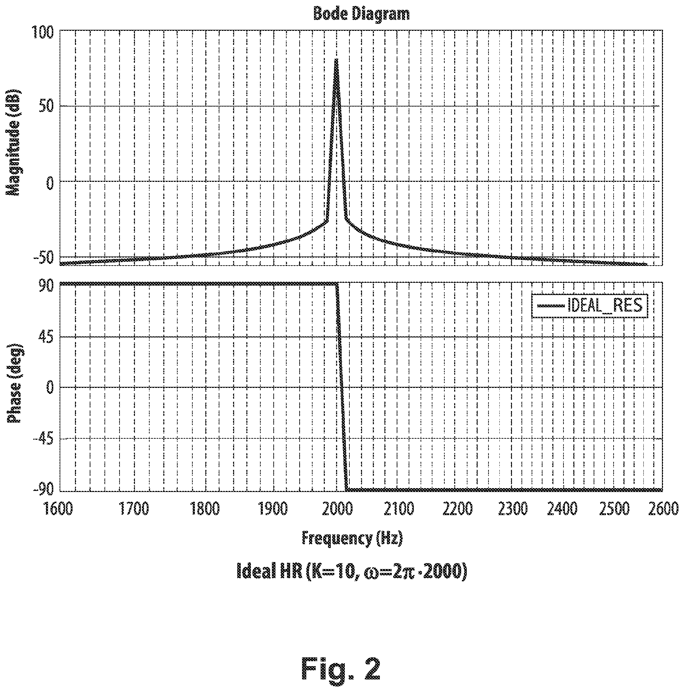

Reference will now be made to the drawings wherein like reference numerals identify similar structural features or aspects of the subject disclosure. For purposes of explanation and illustration, and not limitation, an illustrative view of an embodiment of a control system in accordance with the disclosure is shown in Fig. 1 and is designated generally by reference character 100. Other embodiments and/or aspects of this disclosure are shown in Figs. 2-16.

Referring to Fig. 1, a harmonic regulator 101 for an AC power system (e.g., a 3-phase generator) can include a regulator module 103 configured to filter or cancel one or more harmonic frequencies (e.g., odd harmonics) of a fundamental frequency. The regulator module 103 can be configured to inflect phase angle output about the one or more harmonic frequencies (e.g., as shown in Figs. 2-5). The regulator module 103 can be configured to shift phase at or near (e.g., within 20 percent of) one or more harmonic frequencies by a shift angle to prevent primary regulator instability (e.g., as shown in Figs, 4 and 5). The regulator module 103 and/or the regulator 101 can include any suitable computer hardware and/or software module(s) configured to perform any suitable disclosed function and/or method.

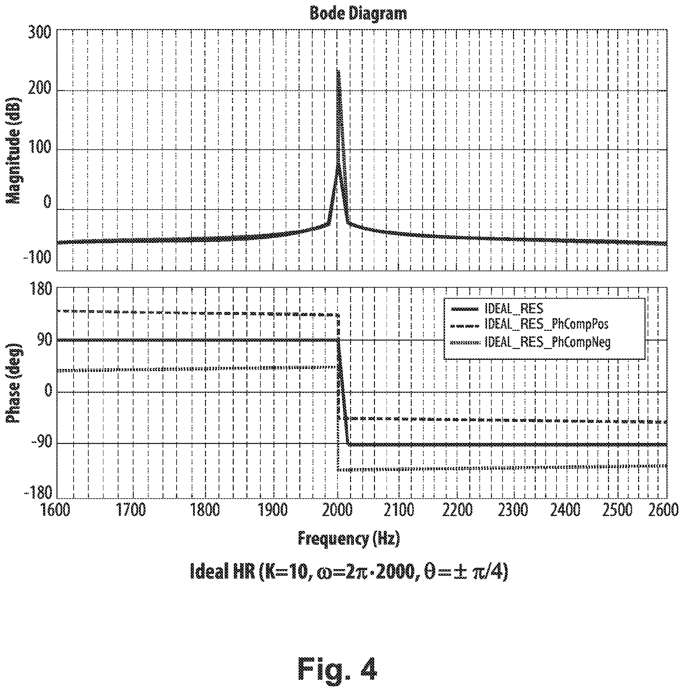

In certain embodiments, the shift angle can be 45 degrees (e.g., as shown in Figs. 4-5). For example, the shift angle can be positive 45 degrees. In certain embodiments, the shift angle is negative 45 degrees. In certain embodiments, the shift angle can be selected from a positive or negative shift angle based on the conditions needed to ensure stability (e.g., the module 103 can be configured to use both positive and negative phase compensation of the same angle when appropriate, only one at a time). Any suitable shift angle and/or combinations thereof to prevent control instability is contemplated herein, and one having ordinary skill in the art in view of this disclosure can determine any other suitable angle without undue experimentation.

In certain embodiments, an output of the harmonic module 103 can be ideal. For example, the output of the harmonic module 103 can be defined by Laplace domain equation (3), disclosed below. In certain embodiments, K=10, $\omega=2\pi\cdot2000$ (e.g., the 5th harmonic of 400Hz), $\theta=\pm \pi/4$ ($\pm45$ degrees). Any other suitable values are contemplated herein.

In certain embodiments, an output of the harmonic module 103 can be non-ideal. For example, in certain embodiments, the output of the harmonic module 103 can be defined by Laplace domain equation (4), disclosed below. In certain embodiments, K=10, $\omega=2\pi\cdot2000$, $\zeta=0.01$, $\theta=\pm \pi/4$. Any other suitable values are contemplated herein.

As shown in Fig. 1, a power control system 100 for an AC system, can include a primary regulator 105 configured to regulate a fundamental frequency, and a harmonic regulator 101 configured to prevent control system instability. The primary regulator 105 can include any suitable structure. The primary regulator 105 can have the same structure as the harmonic regulator 101, but be configured to regulate the fundamental (main) frequency. The harmonic regulator 101 can be any suitable embodiment of a harmonic regulator 101 disclosed herein, e.g., as described above.

The system 100 can include a primary sum block 107 configured to sum a harmonic regulator output 101a with the primary regulator output 105a (e.g., to cancel harmonics). The system 100 can include a harmonic regulator sum block 109 connected to an output of a plant 111 (e.g., to receive system feedback 111a) and an input of the harmonic regulator 101 and configured to subtract an output 111a from a reference value. In certain embodiments, the reference value can be zero (e.g., as shown), for example. Any other suitable components and/or sum blocks (e.g., a disturbances sum block 113 between a the primary sum block 107 and a plant 111, a feedback sum block 115 between an input value the primary regulator 105), are contemplated herein.

In accordance with at least one aspect of this disclosure, a method can include preventing control instability in a power system by modifying phase of a harmonic regulator output at or near one or more harmonic frequencies. In certain embodiments, modifying phase can include adding phase angle to the harmonic regulator output. Modifying phase can include subtracting phase angle from the harmonic regulator output. The method can include any other suitable method(s) and/or portion(s) thereof.

Embodiments disclosed herein include a harmonic regulator with enhanced stability. Harmonic regulators (also called resonant regulators), can be used to regulate certain unwanted frequencies in power system and improve power quality. An example use for such regulators is in control of Variable Speed Constant Frequency (VSCF) generators, where harmonic regulator(s) are used to eliminate unwanted harmonics, especially in case with nonlinear rectifier loads where significant harmonic content is present (e.g., 5th, 7th, 11th, etc.).

Harmonic regulators can be narrow frequency band regulators, designed to regulate specific frequencies. Frequency domain (Laplace domain) of ideal harmonic regulator (HR) is shown in equation (1):

$$HR\_IDEAL(s) = K\,\frac{2s}{s^2+\omega^2} \qquad (1)$$

Fig. 2 shows bode plot of ideal HR for $\omega=2\pi\cdot2000$ (i.e. 5th harmonic for 400Hz application) and K=10. It shows a very narrow magnitude peak around to 2000Hz and a sharp change in phase from +90° to -90° (abrupt phase shift of 180°). In such harmonic regulators, HR together with the Plant can destabilize the system because of its high gain and sharp phase change around the peak, which can be readily understood from Nyquist stability criterion for those having ordinary skill in the art. In other words, open loop gain (HR and Plant) can be greater than 1 when phase is -180°, or phase can be less then -180° when gain is 1, which would destabilize the system.

To partially mitigate this issue with stability, non-ideal resonant regulators can be used in control systems, shown in equation (2):

$$HR\_NON\_IDEAL(s) = K\,\frac{(2\zeta\omega)s}{s^2+(2\zeta\omega)s+\omega^2} \qquad (2)$$

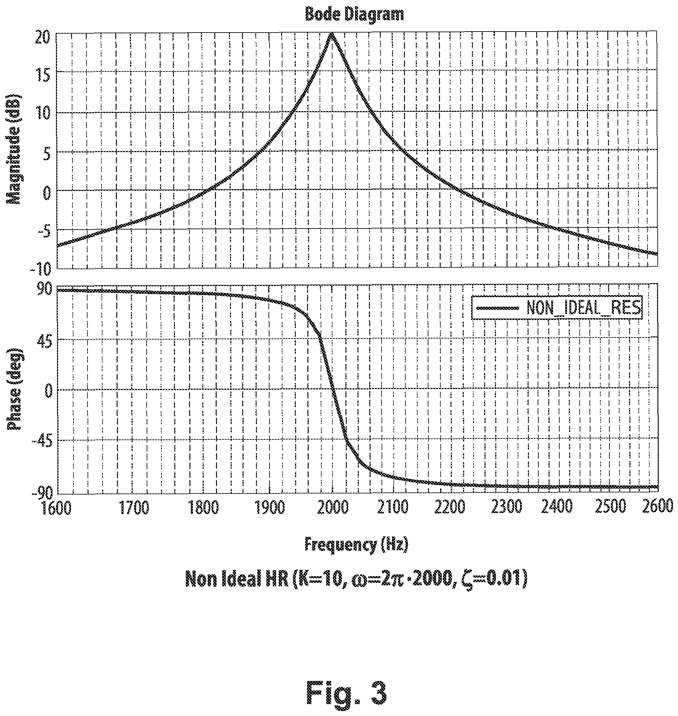

Fig. 3 shows a bode plot of a non-ideal HR (K=10, $\omega=2\pi\cdot2000$, $\zeta=0.01$). It can be seen that magnitude peak is reduced and widened, and the net phase change of 180° is not as abrupt as is the case with an ideal HR. In practice, it has been shown that non-ideal HRs have less stability problems than ideal HRs, but instability can still occur.

Embodiments include a modified HR, such that a phase shift is provided at or near the resonant frequency. Phase change can still be a net of 180° at resonant frequency, but can be shifted in either a positive or negative direction. An example ideal HR with Phase Compensation is shown in equation (3):

$$HR\_IDEAL\_PhComp(s) = K\,\frac{2(s\cdot\cos(\theta)-\omega\cdot\sin(\theta))}{s^2+\omega^2} \qquad (3)$$

Fig. 4 shows bode plot of an ideal HR with Phase Compensation where phase around resonant frequency is shifted $\pm\,\pi/4$. Magnitude stays the same around resonant frequency but phase can be shifted "up or down" by magnitude θ (shift angle) where the phase shift occurs at or near resonant frequency. The plant model shown represents load components (e.g., rectifiers).

A non-ideal HR can be modified to include Phase Compensation as shown in (4):

$$HR\_NON\_IDEAL\_PhComp(s) = K\,\frac{(2\zeta\omega)(s\cdot\cos(\theta)-\omega\cdot\sin(\theta))}{s^2+(2\zeta\omega)s+\omega^2} \qquad (4)$$

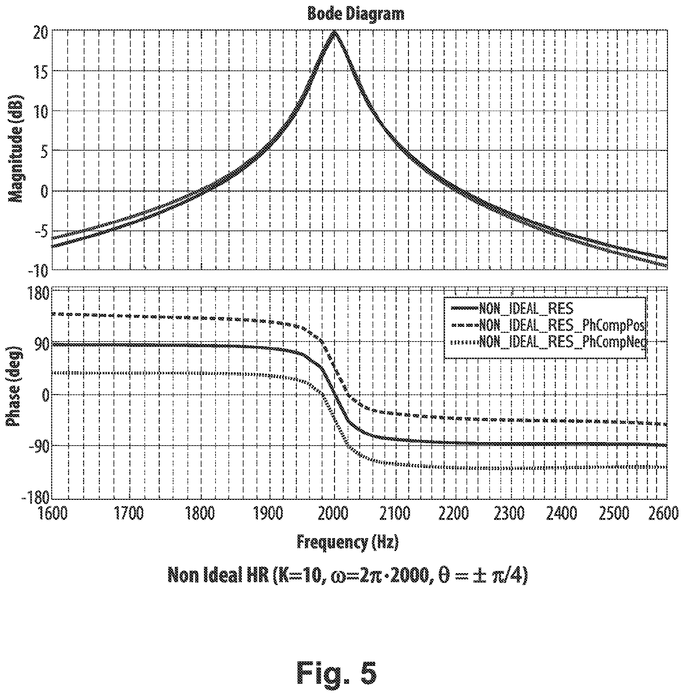

Fig. 5 shows bode plot of a non-Ideal HR with Phase Compensation where phase around resonant frequency is shifted $\pm \pi/4$. Again, the magnitude stays the same around resonant frequency but phase can be shifted "up or down" by magnitude $\theta$, where the phase shift occurs at or near resonant frequency.

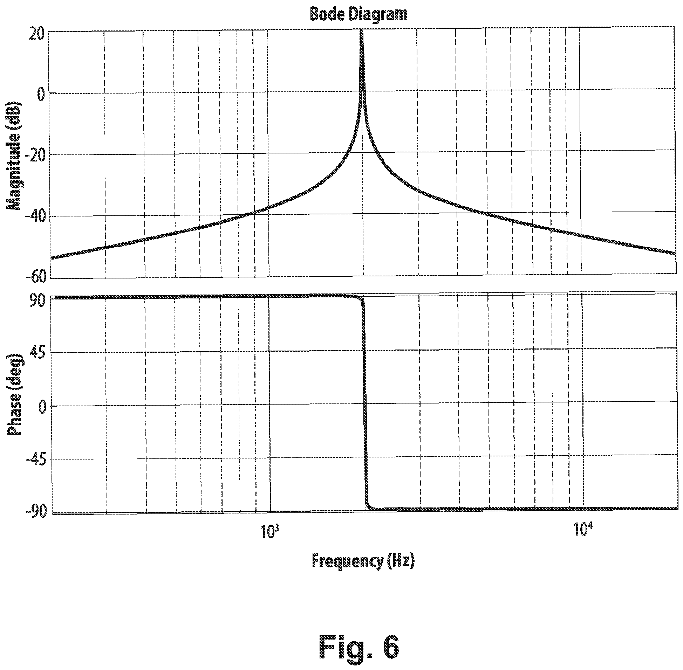

An example test case is shown in Figs. 6-16. For example, a Bode plot of non-ideal harmonic regulator (Eq. A) is shown in Fig. 6 with parameters K = 10, $\omega = 2\pi \cdot 2000$; $\zeta = 0.001$.

$$HR\_NON\_IDEAL(s) = K\frac{(2\zeta\omega)s}{s^2+(2\zeta\omega)s+\omega^2} \qquad \text{(Eq. A)}$$

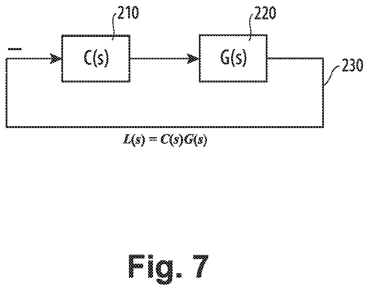

As shown in FIG. 7, a system 200 can include loop gain L(s)=C(s)xG(s). The transfer function C(s) 210 of the controller and transfer function G(s) 220 of the plant being controlled are shown. The system 200 provides the output of G(s) 230 as negative feedback to the input of the controller transfer function C(s) 210. (*this text is from* US10658919(B1))

For stability, the loop gain L(s) (which is the product of C(s) and G(s)) is assessed for phase margin and gain margin. It is common for the plant to induce a destabilizing phase lag which increases with frequency. This phase lag will occur due to instrumentation, discrete system effects, filter impedance effects, and load impedance effects. In the presence of harmonic regulators it is common for this to result in negative phase margin (e.g., instability) at some frequencies (particularly higher frequencies). Therefore, control of some frequencies may not be possible without modification of harmonic regulator (Eq. A).

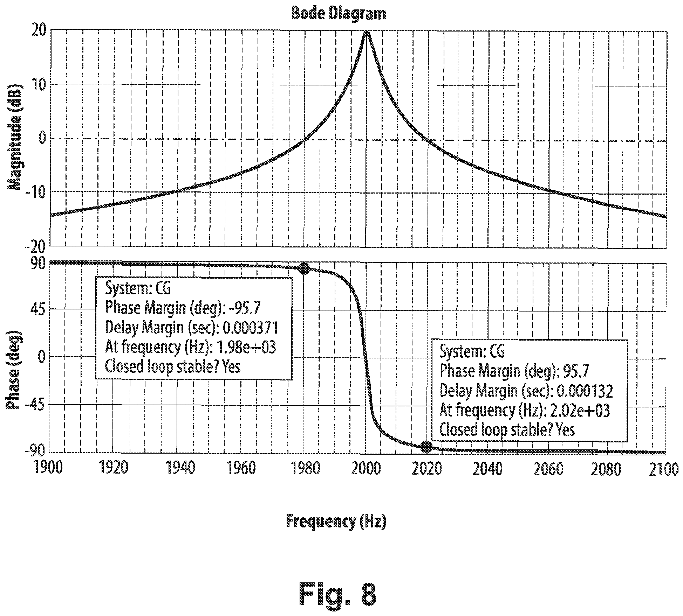

Fig. 7 is a simplified block diagram of a feedback-controlled dynamic system, depicting the system loop gain L(s), wherein C(s) is the compensator transfer function and G(s) is the transfer function of the plant being controlled. If the controller has the same transfer function displayed in Fig. 6, and a plant transfer function G(s)=1, then the system 200 will be stable as shown in Fig. 8.

Fig. 8 depicts a phase margin of the system shown in Fig. 7, wherein C(s) is the transfer function depicted in the Fig. 6 bode plot, and G(s) is unity. As provided in Fig. 8, the bode plot depicts 95.7 degrees of additional phase lead before the phase at the first crossover frequency exceeds +180 degrees, and 95.7 degrees of additional phase lag may be added before the phase at the second crossover frequency decreases below -180 degrees.

$$C(s) = HR\_NON\_IDEAL(s) = K\frac{(2\zeta\omega)s}{s^2+(2\zeta\omega)s+\omega^2} \qquad \text{(Eq. Ba)}$$

$$G(s) = 1 \qquad \text{(Eq. Bb)}$$

Now assume 150 $\mu$s delay is introduced due to sampling effects, that is:

$$G(s) = e^{-s\cdot tPlant}$$

where

$$tPlant = 150\mu s$$

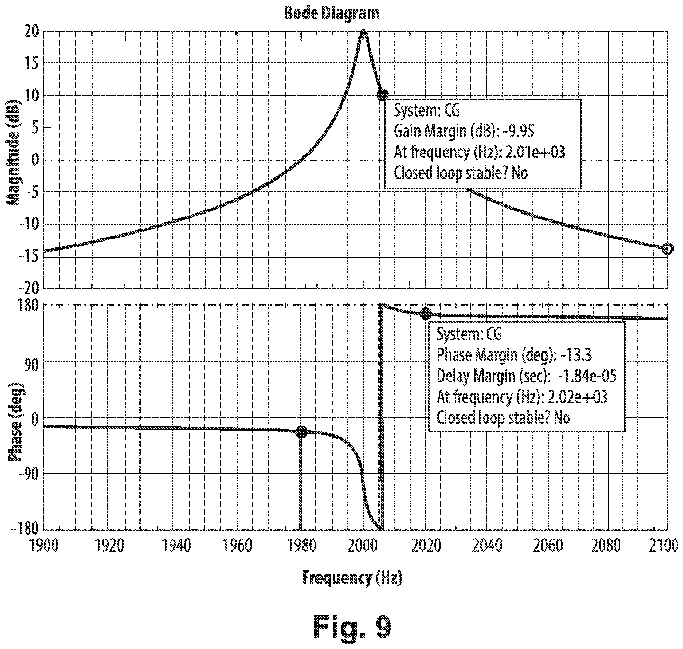

The resultant bode plot of the loop transfer function is now shown in Fig. 9. The system is now unstable since the phase delay at the second crossover frequency decreases below -180. This limits the ability of harmonic regulators to be used for VSCF power quality improvements.

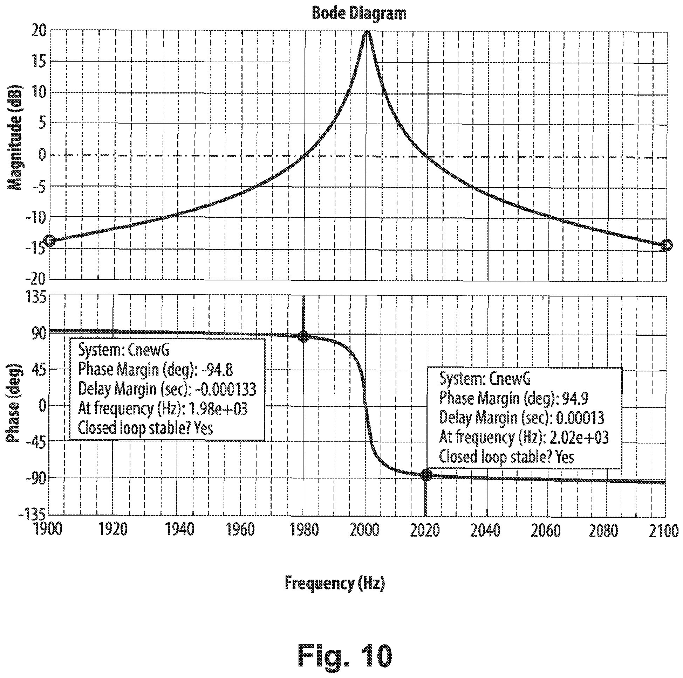

Fig. 9 depicts the gain and phase margin of the system shown in Fig. 7, wherein C(s) is the transfer function depicted in the Fig. 6 bode plot, and G(s) is a 150 $\mu$s delay. A Bode plot of a non-ideal harmonic regulator in accordance with this disclosure with phase compensation (Eq. C) is shown in Fig. 10.

$$C(s) = HR\_NON\_IDEAL\_PhComp(s) = K\frac{(2\zeta\omega)(s\cdot\cos(\theta)-\omega\cdot\sin(\theta))}{s^2+(2\zeta\omega)s+\omega^2}\text{(Eq. C)}$$

Fig. 10 depicts the bode plot of non-ideal harmonic regulator with delay compensation in accordance with one or more embodiments;, between 1900 Hz and 2100 Hz, with phase margin shown, when $\theta$ = (phase delay at 2000 Hz)

· (2π·2000) = 150 μs ·2π·2000 rad/s = 3π/5 rad.

Since phase delay of the plant (combined) is 150 μs at 2000 Hz (2π·2000 rad/s), phase compensation angle θ is chosen to compensate for that phase lag:

$$\theta = tPlant \cdot \omega = 150\,\mu s \cdot 2\pi \cdot 2000\frac{rad}{s} = \frac{3\pi}{5}rad$$

Due to the phase compensated non-ideal harmonic regulator, there is now about 94.9 degrees of phase margin at the upper and about -94.8 phase margin at lower unity gain crossover frequencies. Therefore, the system is now stable. In one or more embodiments, the loop delay is observed during the operation of the system. The measured delay of the plant can be used to select the amount of phase compensation.

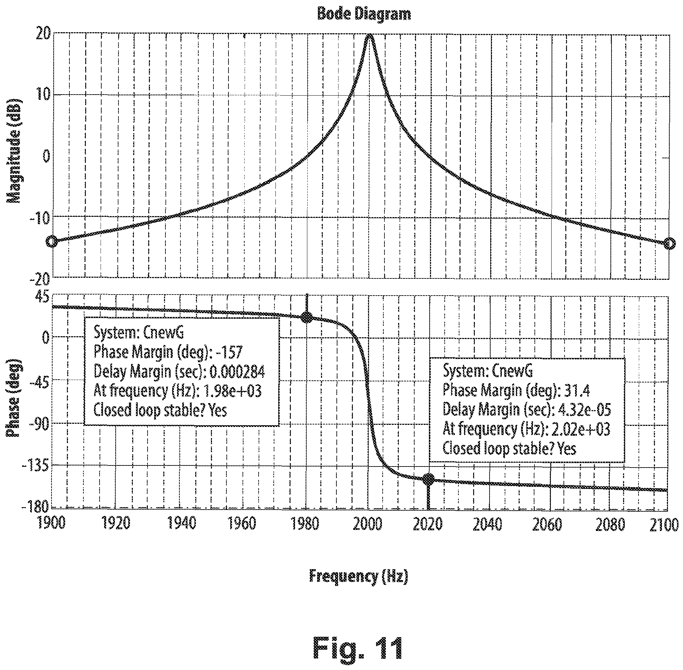

Phase compensation amount to stabilize the system does not have to be equal to the phase delay of the plant (as shown above). For example if θ = π/4 rad/sec, it will still stabilize the system, but with lower stability margins, as shown in Fig. 11. Fig 11 shows the bode plot of non-ideal harmonic regulator with delay compensation in accordance with one or more embodiments, between 1900 Hz and 2100 Hz, with phase margin shown, when θ=π/4 rad. In this case, there is about 31.4 degrees of phase margin at the upper and about -157 phase margin at lower unity gain crossover frequencies.

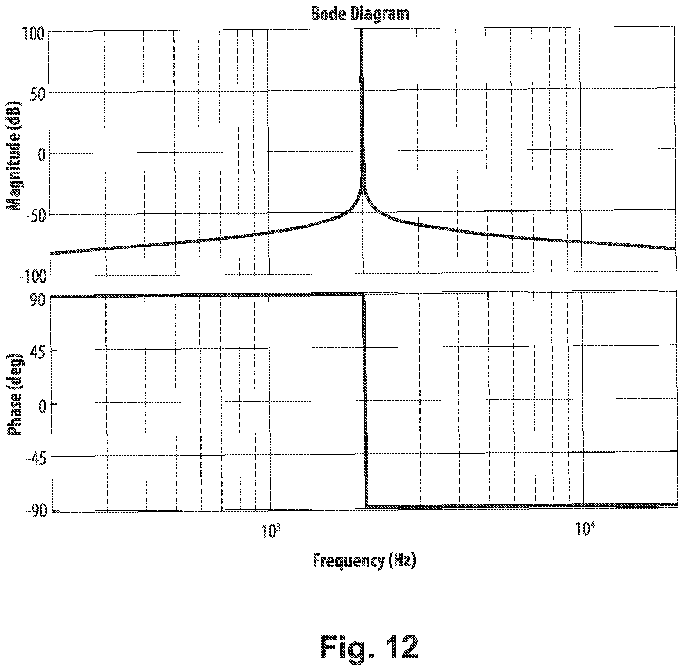

As shown above for non-ideal harmonic regulators with phase compensation, the same approach can be used to create ideal harmonic regulators with phase compensation. Figs. 12-16 below are counter parts for ideal regulators as figs. above are for non-ideal regulators.

$$HR\_IDEAL(s) = K\frac{2s}{s^2+\omega^2} \qquad (\text{Eq. D})$$

Fig. 12 is a bode blot of ideal harmonic regulator with K = 10, ω = 2π·2000

$$C(s) = HR\_IDEAL(s) = K\frac{2s}{s^2+\omega^2} \qquad (\text{Eq. E})$$

$$G(s) = 1 \qquad (\text{Eq. F})$$

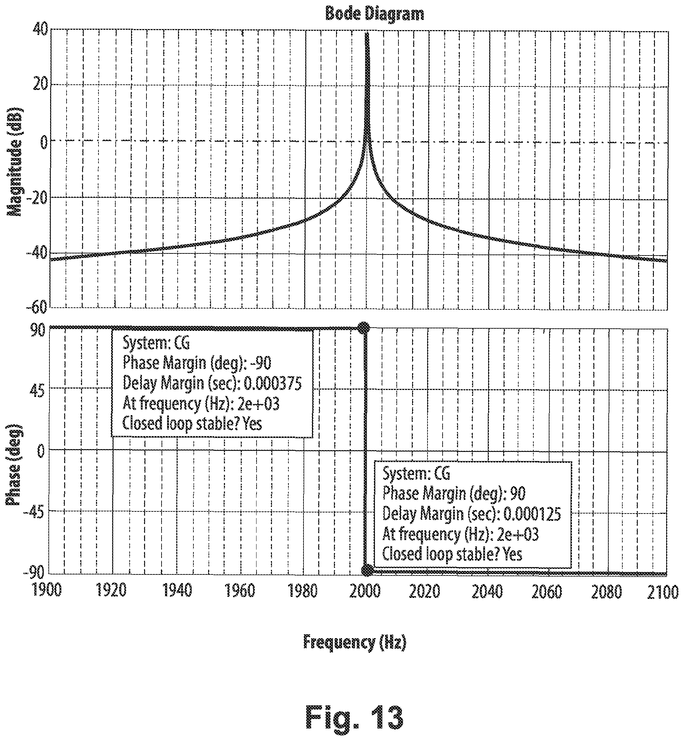

Fig. 13. shows a phase margin of the system shown in Fig. 7, wherein C(s) is the transfer function depicted in the Fig. 12 bode plot, and G(s) is unity.

$$C(s) = HR\_IDEAL(s) = K\frac{2s}{s^2+\omega^2} \qquad (\text{Eq. G})$$

$$G(s) = e^{-s\cdot tPlant}$$

where

$$tPlant = 150\mu s \qquad (\text{Eq. H})$$

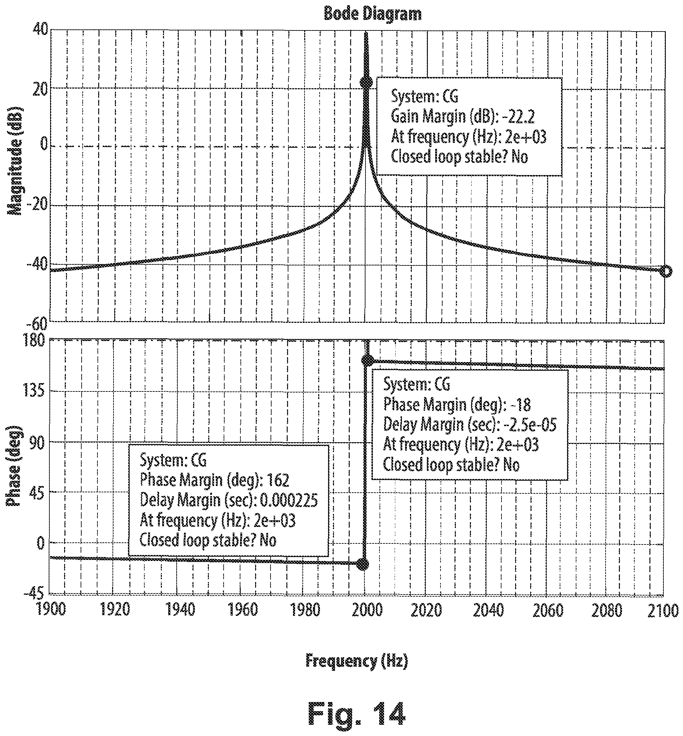

Fig. 14. depicts the gain and phase margin of the system shown in Fig. 7, wherein C(s) is the transfer function depicted in the Fig. 12 bode plot, and G(s) is a 150 μs delay

$$G(s) = e^{-s\cdot tPlant}$$

where

$$tPlant = 150\mu s \qquad (\text{Eq. I})$$

$$C(s) = HR\_IDEAL\_PhComp(s) = K\frac{2(s\cdot\cos(\theta)-\omega\cdot\sin(\theta))}{s^2+\omega^2} \qquad (\text{Eq. J})$$

$$\theta = tPlant \cdot \omega = 150\,\mu s \cdot 2\pi \cdot 2000\frac{rad}{s} = \frac{3\pi}{5}rad \qquad (\text{Eq. K})$$

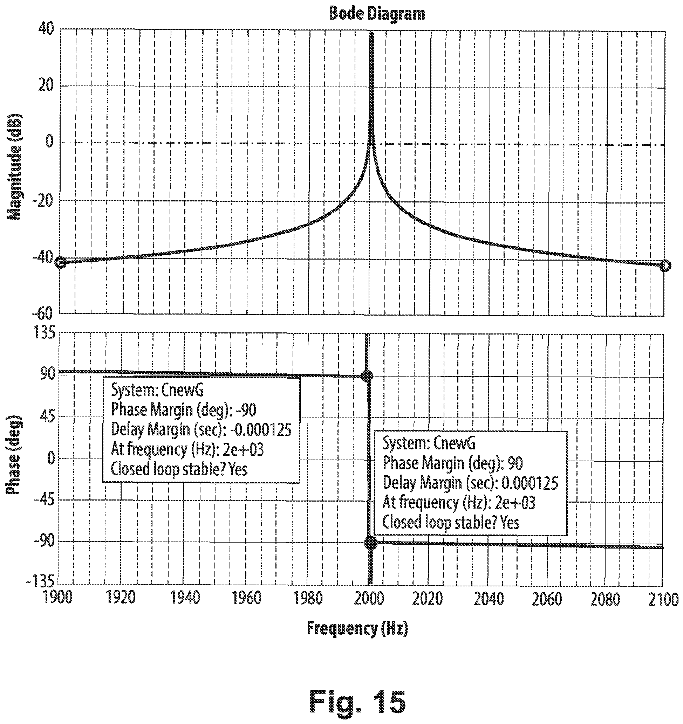

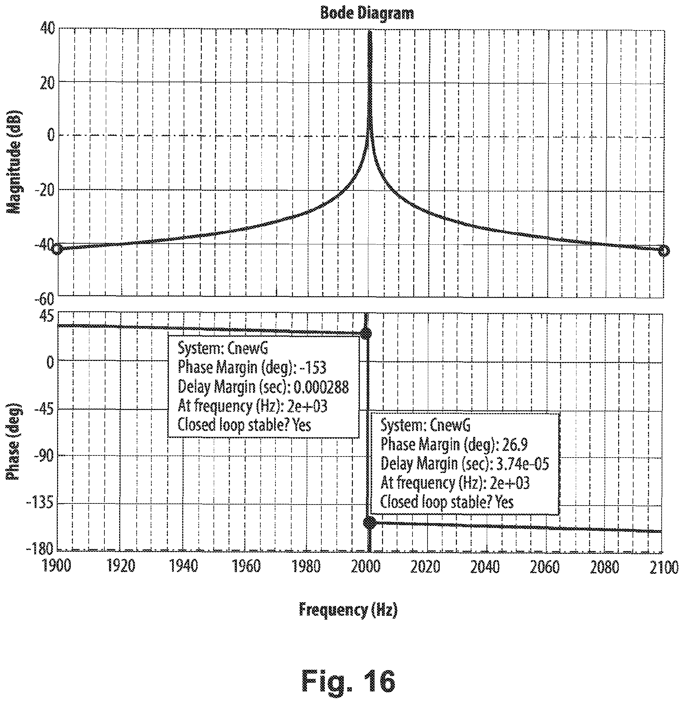

Fig. 15. depicts the bode plot of ideal harmonic regulator with delay compensation in accordance with one or more embodiments;, between 1900 Hz and 2100 Hz, with phase margin shown, when $\theta$ = (phase delay at 2000 Hz) · ($2\pi$·2000) = 150 $\mu$s ·$2\pi$·2000 rad/s = $3\pi/5$ rad, $\theta = \frac{\pi}{4}rad$ . Fig. 16 shows an ideal counterpart of the non-ideal harmonic regulator of Fig 6 above, for example.

Embodiments with phase compensation can stabilize ideal and non-ideal harmonic regulators. How much phase compensation $\theta$ to be used can depend on the plant, and the phase shift angle $\theta$ can be designed for maximum phase and gain stability margins.

Previous attempts to stabilize the system include introducing additional delays to the harmonics regulator. However, embodiments of this disclosure utilize a modified harmonic regulator (e.g., with phase compensation at resonant frequency) that stabilizes the system. This new approach has certain advantages over the prior art. For example, the response of the regulator is faster (e.g., because it doesn't introduce additional delays), and implementation is simpler (especially in discreet domain for DSP and FPGA). Embodiments can also stabilize ideal harmonic regulators as well as non-ideal harmonic regulators.

Embodiments can include any number of regulators for any number of harmonics, for example (e.g., one or more). Embodiments can solve instability problems in a power quality regulator, e.g., for a Variable Speed Constant Frequency (VSCF) generator, or any other suitable application. Modified harmonic regulators can add an additional degree of freedom to ensure stability of power quality controller for a VSCF generator, for example, and therefore enable exceptional power quality.

As will be appreciated by those skilled in the art, aspects of the present disclosure may be embodied as a system, method or computer program product. Accordingly, aspects of this disclosure may take the form of an entirely hardware embodiment, an entirely software embodiment (including firmware, resident software, micro-code, etc.), or an embodiment combining software and hardware aspects, all possibilities of which can be referred to herein as a "circuit," "module," or "system." A "circuit," "module," or "system" can include one or more portions of one or more separate physical hardware and/or software components that can together perform the disclosed function of the "circuit," "module," or "system", or a "circuit," "module," or "system" can be a single self-contained unit (e.g., of hardware and/or software). Furthermore, aspects of this disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber cable, RF, etc., or any suitable combination of the foregoing.

Computer program code for carrying out operations for aspects of this disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of this disclosure may be described above with reference to flowchart illustrations and/or block diagrams of methods, apparatus (systems) and computer program products according to embodiments of this disclosure. It will be understood that each block of any flowchart illustrations and/or block diagrams, and combinations of blocks in any flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in any flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified herein.

Those having ordinary skill in the art understand that any numerical values disclosed herein can be exact values or can be values within a range. Further, any terms of approximation (e.g., "about", "approximately", "around") used in this disclosure can mean the stated value within a range. For example, in certain embodiments, the range can be within (plus or minus) 20%, or within 10%, or within 5%, or within 2%, or within any other suitable percentage or number as appreciated by those having ordinary skill in the art (e.g., for known tolerance limits or error ranges).

The articles "a", "an", and "the" as used herein and in the appended claims are used herein to refer to one or to more than one (i.e., to at least one) of the grammatical object of the article unless the context clearly indicates otherwise. By way of example, "an element" means one element or more than one element.

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of' or "exactly one of," or, when used in the claims, "consisting of," will refer to the inclusion of exactly one element of a number or list of elements. In general, the term "or" as used herein shall only be interpreted as indicating exclusive alternatives (i.e., "one or the other but not both") when preceded by terms of exclusivity, such as "either," "one of," "only one of," or "exactly one of."

Any suitable combination(s) of any disclosed embodiments and/or any suitable portion(s) thereof are contemplated herein as appreciated by those having ordinary skill in the art in view of this disclosure.

The embodiments of the present disclosure, as described above and shown in the drawings, provide for improvement in the art to which they pertain. While the subject disclosure includes reference to certain embodiments, those skilled in the art will readily appreciate that changes and/or modifications may be made thereto without departing from the scope of the subject disclosure.

**Claims**

1. A harmonic regulator for an AC power system, comprising:
   a regulator module configured to filter or cancel one or more harmonic frequencies of a fundamental frequency, wherein the regulator module is configured to inflect phase angle output about the one or more harmonic frequencies, wherein the regulator module is configured to shift phase at or near one or more harmonic frequencies by a shift angle to prevent system instability.

2. The harmonic regulator of claim 1, wherein the shift angle is 45 degrees.

3. The harmonic regulator of claim 2, wherein the shift angle is positive 45 degrees, or wherein the shift angle is negative 45 degrees.

4. The harmonic regulator of claim 1, 2 or 3, wherein an output of the harmonic module is ideal.

5. The harmonic regulator of claim 4, wherein the output of the harmonic module is defined by Laplace domain equation (3):

$$HR\_IDEAL\_PhComp(s) = K \frac{2(s \cdot \cos(\theta) - \omega \cdot \sin(\theta))}{s^2 + \omega^2} \qquad (3)$$

6. The harmonic regulator of claim 5, wherein K=10, $\omega$=2$\pi$·2000, $\theta$=$\pm$ $\pi$/4.

7. The harmonic regulator of claim 1, 2 or 3, wherein an output of the harmonic module is non-ideal.

8. The harmonic regulator of claim 7, wherein the output of the harmonic module is defined by Laplace domain equation (4):

$$HR\_NON\_IDEAL\_PhComp(s) = K \frac{(2\zeta\omega)(s \cdot \cos(\theta) - \omega \cdot \sin(\theta))}{s^2 + (2\zeta\omega)s + \omega^2} \qquad (4)$$

9. The harmonic regulator of claim 8, wherein K=10, $\omega$=2$\pi$·2000, $\zeta$=0.01, $\theta$=$\pm$ $\pi$/4.

10. A power control system for an AC system, comprising:

    a primary regulator configured to regulate a fundamental frequency; and
    a harmonic regulator as claimed in any of claims 1 to 9.

11. The system of claim 10, further comprising a primary sum block configured to sum a harmonic regulator output with the primary regulator output.

12. The system of claim 11, further comprising a harmonic regulator sum block connected to an output of a plant and an input of the harmonic regulator and configured to subtract an output from a reference value.

13. The system of claim 12, wherein the reference value is zero.

14. A method, comprising:
    preventing control instability in a power system by modifying phase of a harmonic regulator output at or near one or more harmonic frequencies.

15. The method of claim 14, wherein modifying phase includes adding phase angle to the harmonic regulator output, or wherein modifying phase includes subtracting phase angle from the harmonic regulator output.

Fig. 1

**Bode Diagram**

Ideal HR (K=10, ω=2π·2000)

## Fig. 2

Fig. 3

Fig. 4

Fig. 5

Fig. 6

$$L(s) = C(s)G(s)$$

## Fig. 7

Fig. 8

**Bode Diagram**

System: CG
Gain Margin (dB): -9.95
At frequency (Hz): 2.01e+03
Closed loop stable? No

System: CG
Phase Margin (deg): -13.3
Delay Margin (sec): -1.84e-05
At frequency (Hz): 2.02e+03
Closed loop stable? No

**Fig. 9**

Fig. 10

Fig. 11

Fig. 12

**Bode Diagram**

System: CG
Phase Margin (deg): -90
Delay Margin (sec): 0.000375
At frequency (Hz): 2e+03
Closed loop stable? Yes

System: CG
Phase Margin (deg): 90
Delay Margin (sec): 0.000125
At frequency (Hz): 2e+03
Closed loop stable? Yes

Frequency (Hz)

Fig. 13

Fig. 14

Fig. 15

Fig. 16

Europäisches
Patentamt

European
Patent Office

Office européen
des brevets

# EUROPEAN SEARCH REPORT

**Application Number**

EP 22 15 0451

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ROJAS FELIX ET AL: "A Design Methodology of Multiresonant Controllers for High Performance 400 Hz Ground Power Units", IEEE TRANSACTIONS ON INDUSTRIAL ELECTRONICS, IEEE SERVICE CENTER, PISCATAWAY, NJ, USA, vol. 66, no. 8, 1 August 2019 (2019-08-01), pages 6549-6559, XP011717039, ISSN: 0278-0046, DOI: 10.1109/TIE.2019.2898610 [retrieved on 2019-03-29] * page 2 -labelled 6550-, Equation (2); page 2 -labelled 6550-, right column, second-to-last paragraph page 7 -labelled 6555-, section "1) Steady-state performance";; figure 1; table I * | 1-6, 10-15 | INV. H02J3/01 H02M1/12 |
| | ----- | | |
| X | HANS FLORIAN ET AL: "Design of Multifrequency Proportional-Resonant Current Controllers for Voltage-Source Converters", IEEE TRANSACTIONS ON POWER ELECTRONICS, INSTITUTE OF ELECTRICAL AND ELECTRONICS ENGINEERS, USA, vol. 35, no. 12, 7 May 2020 (2020-05-07), pages 13573-13589, XP011802943, ISSN: 0885-8993, DOI: 10.1109/TPEL.2020.2993163 [retrieved on 2020-08-04] * Equation (10); table II * | 1-3,7-15 | |
| | ----- | | TECHNICAL FIELDS SEARCHED (IPC) |
| | -/-- | | H02J H02M |

The present search report has been drawn up for all claims

| Place of search | Date of completion of the search | Examiner |
|---|---|---|
| Munich | 25 May 2022 | Varela Fraile, Pablo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 22 15 0451

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ALEJANDRO G YEPES ET AL: "Analysis and Design of Resonant Current Controllers for Voltage-Source Converters by Means of Nyquist Diagrams and Sensitivity Function", IEEE TRANSACTIONS ON INDUSTRIAL ELECTRONICS, IEEE SERVICE CENTER, PISCATAWAY, NJ, USA, vol. 58, no. 11, 1 November 2011 (2011-11-01), pages 5231-5250, XP011359031, ISSN: 0278-0046, DOI: 10.1109/TIE.2011.2126535 * Equation (3) * | 1-6, 10-15 | |

TECHNICAL FIELDS
SEARCHED (IPC)

The present search report has been drawn up for all claims

| Place of search | Date of completion of the search | Examiner |
|---|---|---|
| Munich | 25 May 2022 | Varela Fraile, Pablo |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10658919 B1